# EUROPÄISCHE PATENTSCHRIFT

(11) **EP 0 984 130 B1**
(45) Veröffentlichungstag und Bekanntmachung des Hinweises auf die Patenterteilung: **17.03.2004**
(21) Anmeldenummer: 99113858.7
(22) Anmeldetag: 15.07.1999
(51) Int. Cl.: E05F 15/14, E05F 15/10

(54) **Automatischer Türantrieb**
Automaticdoor driving mechanism
Entraînement automatique pour des portes

(30) Priorität: 06.08.1998 DE 19835632
(43) Veröffentlichungstag der Anmeldung: 08.03.2000
(73) Patentinhaber: agta record ag, 8320 Fehraltorf (CH)
(72) Erfinder: Schwager, Anton, 8332 Russikon (CH)
(74) Vertreter: Flach, Dieter Dipl.-Ing

(56) Entgegenhaltungen:
- EP-A- 0 191 730
- EP-A- 0 663 505
- DE-A- 3 826 718
- DE-A- 3 940 762
- DE-A- 19 523 241
- DE-A- 19 641 592
- US-A- 4 167 833

## Beschreibung

Die Erfindung betrifft einen automatischen Türantrieb nach dem Oberbegriff des Anspruches 1.

Gemäß der DE-A 39 40 762 ist es bekannt bei einer automatischen Schiebetür mit mindestens einem Flügel einen Hilfsantrieb zuzuordnen. Beim normalen Schließen der Tür wird dem Hilfsantrieb Energie zugeführt und darin gespeichert. Bei Strom- oder Netzausfall und damit gleichzeitiger Entkopplung des normalen Antriebes kann dann diese zuvor gespeicherte Energie benutzt werden, um den Schiebetürflügel zu öffnen.

Eine dem gegenüber verbesserte Konstruktion ist aus der EP 0 663 505 B1 bekannt geworden, die sich dadurch auszeichnet, dass zumindest mittelbar zwischen einem Türflügel und einem Antriebs-Übertragungsmittel eine Kupplungseinrichtung vorgesehen ist, wobei sich der Hilfsantrieb zum einen an dem ihm zugeordneten Türflügel und zum anderen zumindest mittelbar an dem Antriebs-Übertragungsmittel abstützt. Dadurch lässt sich der Vorteil realisieren, dass im Normalbetrieb der Hilfsantrieb und die Kupplungseinrichtung mit dem Antriebs-Übertragungsmittel und dem zugeordneten Türflügel mitlaufen, also mitbewegt werden, so dass nicht bei jedem Schließvorgang erneut Energie im Hilfsantrieb gespeichert werden muss.

Demgegenüber gibt es Vorschläge für automatische Türsteuerungsantriebe, insbesondere Schiebetüren, die bei einem Stromausfall oder einer sonstigen Notsituation einen Notfallbetrieb aufrechterhalten oder durchführen sollen, und zwar unter Zuschaltung einer Batteriestromquelle. In der Regel handelt es sich bei einem derartigen Notfallbetrieb um eine automatische Öffnungsbewegung der Tür zur Freigabe eines Fluchtweges, wobei es sich aber auch um eine Schließbewegung handeln kann, nämlich dann, wenn das Entstehen von Zugluft vermieden werden soll, um sicherzustellen, dass im Falle eines Brandherdes das Feuer nicht zusätzlich angefacht wird.

Derartige übliche und naheliegende Steuerungseinrichtungen unter Zuschaltung einer Batteriestromquelle sind beispielsweise in der US 4,167,833, der DE-A1 38 26 718 sowie der DE 196 41 592 A1 beschrieben. Dabei beschreibt die DE-A1 38 36 718 A1 ein automatisches Türantriebssystem mit einer Steuereinrichtung, welche im Normalbetrieb die Elektromotoren-Antriebseinrichtung ansteuert und dabei im Normalbetrieb mit einer Netzstromquelle verbunden ist. Es ist ferner eine Umschalteinrichtung für einen Hilfsantrieb vorgesehen, der die.Elektromotoren-Antriebseinrichtung mit einer Gleichstrom- und Batteriestrom-Quelle für einen Abnorm- oder Notfallbetrieb verbindet, wenn es zu einem Ausfall der Netzstromquelle kommt.

Aus der EP-A1 0 191 730 ist ein elektrischer Türantrieb unter Verwendung von zwei Elektromotoren zu entnehmen. Die beiden Antriebe arbeiten aber in der Praxis zusammen, wobei lediglich ein Hauptmotor für die größere Geschwindigkeit und ein kleinerer Zusatzmotor zur Veränderung der Geschwindigkeit der Schließ- und/oder Öffnungsbewegung des Türflügels vorgesehen ist. Dieser vorveröffentlichte Türantrieb stellt allerdings keinen redundanten Antrieb dar.

Über Teile Betätigungsstrecke wird jedoch auch jeder Motor einzeln angesteuert und wirkt allein auf die Tür ein.

Durch diesen vorbekannten Stand der Technik lässt sich allerdings immer noch kein redundanter eine hohe Sicherheit aufweisender automatischer Antrieb, insbesondere für Schiebetüranlagen, realisieren.

Aufgabe der vorliegenden Erfindung ist es, eine den eingangs geschilderten automatischen Türantrieben von der Sicherheit her weitgehend vergleichbare Lösung zu schaffen, die noch universeller einsetzbar ist (beispielsweise auch bei Rundbogen-Türen), und die dabei einfacher und günstiger herstell- und montierbar ist. Dabei soll der Türantrieb eine gegenüber herkömmlichen Lösung erhöhte Ausfallsicherheit aufweisen.

Die Aufgabe wird entsprechend den im Anspruch 1 angegebenen Merkmalen gelöst. Vorteilhafte Ausgestaltungen der Erfindung sind in den jeweiligen Unteransprüchen angegeben.

Die Erfindung schafft mit einfachen Mitteln einen elektrischen Antrieb für eine automatische Türsteuerung, der für praktisch alle Fehler- und Ausfallsituationen einen Notfallbetrieb ermöglicht, ohne dass - wie bei dem eingangs genannten Stand der Technik - ein mechanischer Kraftspeicher beispielsweise für eine Öffnungsbewegung eines Türflügels notwendig ist.

Erfindungsgemäß sind dazu zwei Elektromotoren für einen Türflügel vorgesehen, so dass bei Ausfall eines Elektromotors eine Öffnungsbewegung immer noch durch den zweiten funktionstüchtigen Elektromotor durchführbar ist.

Im Notfallbetrieb werden dabei die beiden Elektromotoren jedoch nicht über die elektrische Steuerungseinrichtung mit deren Endstufe, sondern bei Ausfall des Stromnetzes direkt über eine Batterie gespeist.

Die gewünschte Redundanz für den automatischen Türantrieb lässt sich u.a. dadurch realisieren, dass die zumindest beiden Elektromotoren jeweils einzeln ansteuer- und betreibbar oder gemeinsam ansteuer- und synchron betreibbar sind, mit anderen Worten also sowohl einzeln ansteuer- und betreibbar als auch gemeinsam ansteuer- und synchron betreibbar. Nur diese Maßnahme impliziert einen Schaltungsaufbau, bei dem die einzelnen elektrischen Zuführleitungen zu den zumindest beiden Motoren nicht verbunden sein dürfen. Denn ein Kabelbruch oder ein Kurzschluss in der einen Leitung zu einem Elektromotor würde dann auch den zweiten Elektromotor stilllegen. Da erfindungsgemäß die zumindest beiden Elektromotoren sowohl einzeln als auch gemeinsam ansteuer- und betreibbar sind, heißt dies, dass ein bezügliches eines Elektromotors oder in seiner Zuführleitung auftretendes Problem keine Auswirkungen auf die Ansteuerung des jeweils anderen Elektromotors hat.

In einer bevorzugten Ausführungsform der Erfindung ist es dadurch ebenfalls möglich, die automatische Türsteuerung ohne eine - wie beim eingangs genannten Stand der Technik - notwendige Kupplungseinrichtung zwischen dem Türflügel und dem Antriebs-Übertragungsmittel auszubilden, wodurch letztlich insgesamt ein noch robusterer, universell einsetzbarer und einfacher herstell- und montierbarer Türantrieb ermöglicht wird.

Die automatische Türsteuerung und deren Elektronik kann so aufgebaut sein, daß ständig das richtige Funktionieren aller Komponenten überwacht wird. Insbesondere durch ständige oder in zeitlichen Abständen durchgeführte Strom- und Temperaturmessungen kann sichergestellt werden, dass die Elektromotoren nicht aufgrund elektrischer Fehler blockieren können. Zudem können Motorunterbrechungen sowie Unterbrechungen in den Batterieleitungen oder entsprechende Ausfallsituationen erkannt werden. Schließlich kann zumindest einmal am Tag eine manuell ausgelöste, vor allem aber auch eine automatisch durchgeführte Notfallsituation unter entsprechender Selbstauswertung durchgeführt werden.

Wie bereits erwähnt, wird durch den Einsatz eines zweiten Elektromotors auf einfache Weise das Problem umgangen, dass bei einem Leitungsbruch zu dem ersten Elektromotor oder einem Leitungsbruch in dem ersten Elektromotor, also bei Ausfall eines Elektromotors, gleichwohl noch ein Notfallbetrieb durch entsprechende Ansteuerung des zweiten Elektromotors durchführbar ist. Durch die direkte Ansteuerung der Elektromotoren unter Umgehung der Endstufe der elektrischen Türsteuerungseinrichtung kann auch bei geringem Batterieversagen eine sichere Ansteuerung der Motoren erfolgen.

Die Erfindung wird nachfolgend anhand eines Ausführungsbeispiels näher erläutert. Dabei zeigen im einzelnen:
- Figur 1 :: eine schematische Seitenansicht einer zweiflügeligen Schiebetüranordnung;
- Figur 2 :: einen auszugsweise und vereinfacht wiedergegebenen Schaltplan für die erfindungsgemäße Türsteuerung.

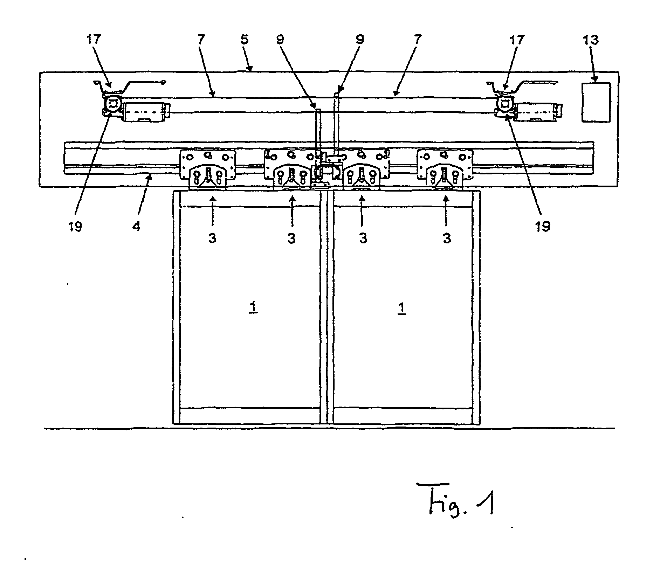

In Figur 1 ist in schematischer Frontansicht eine automatische Schiebetür mit zwei Türflügeln 1 gezeigt, die jeweils über zwei Laufwagen 3 längs einer Führungsschiene 4 zwischen der in Figur 1 gezeigten Schließstellung und einer Öffnungsstellung verfahrbar sind. Die dargestellte Laufschiene 4 gehört zu einer Trag- und Gehäuseeinrichtung 5, in welcher auch ein umsteuerbarer Zahnriemen 7 untergebracht ist. Über Mitnehmer 9 ist jeder der beiden Türflügel 1 entweder mit dem oberen oder mit dem unteren Teil des Gurtes oder Zahnriemens 7 verbunden, so dass in bekannter Weise beim Vorwärtsbewegen des Zahnriemens 7 in einer Richtung beide Türflügel auseinandergefahren und in der Gegenrichtung wieder geschlossen werden.

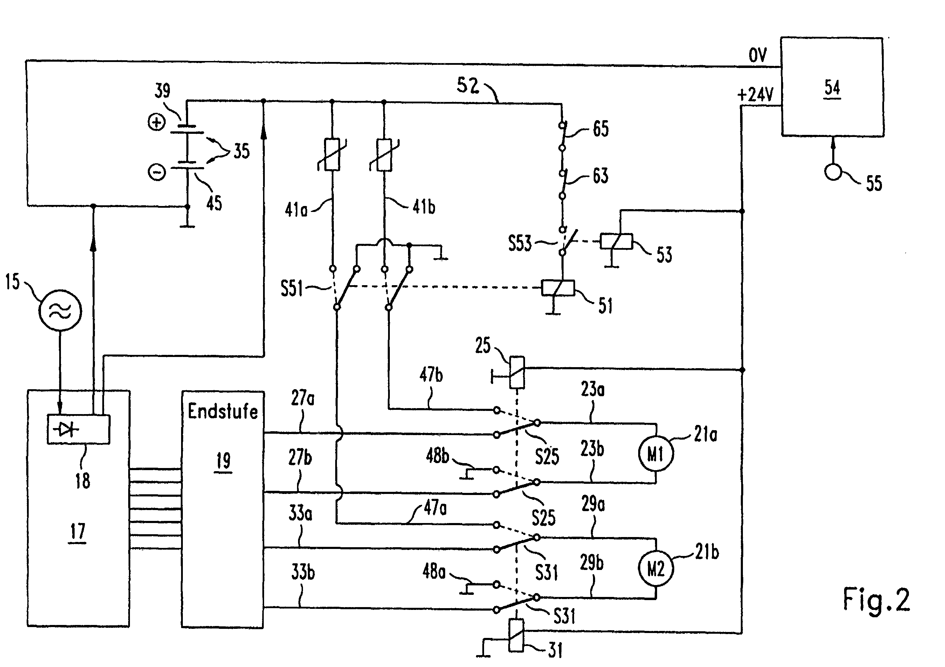

In Figur 1 ist mit Bezugszeichen 13 in schematischer Weise die gesamte automatische Türsteuereinrichtung angedeutet, die auszugsweise und ebenfalls in schematischer Weise - nur so weit zum Verständnis der Funktionsweise erforderlich - in Figur 2 in größerem Detail wiedergegeben ist.

Wie sich aus den Figuren 1 und 2 auch ergibt, wird der als Übertragungsmittel 7' dienende Zahnriemen 7 durch zwei Elektromotoren 17 angetrieben, die bevorzugt gleichzeitig an den Umlenkstellen 19 des Zahnriemens 7 angeordnet sind. Im üblichen Betrieb - also nicht in einer Notfallsituation - werden beide Elektromotoren über eine entsprechende elektrische Türsteuerungseinrichtung 13 synchron angetrieben.

Bereits dieser Aufbau weist den wesentlichen Vorteil auf, daß selbst bei Ausfall eines Elektromotors, beispielsweise durch einen Kabelbruch im Elektromotor oder einem Kabelbruch in einer Zuführleitung zu einem Elektromotor, bereits der Normalbetrieb weiter aufrecht erhalten werden kann, da die Türsteuerung in Öffnungs- und Schließbewegung auch allein nur durch einen Elektromotor bewerkstelligt werden kann.

Der weitere Aufbau zur Durchführung eines Notfallbetriebes wird nunmehr anhand von Figur 2 erläutert.

Die elektronische Steuerungseinheit 13 umfasst danach gemäß Figur 2 u.a. eine Netzstromquelle 15, eine nachgeordnete Steuerungs-, Auswert- und/oder Meßelektronik 17, wozu nachfolgend auch ein Gleichrichter 18 gehört, und eine Endstufe 19, worüber zwei Gleichstrom-Elektromotoren 21a, 21b angesteuert und angetrieben werden können.

Wie dazu aus Figur 2 zu ersehen ist, sind zwei Anschlussleitungen 23a, 23b des ersten Elektromotors 21a über ein erstes Umschaltrelais 25 in der gezeigten Schaltstellung des Umschaltrelais 25 für Normalbetrieb mit zwei Leitungen 27a, 27b über die vorgeschaltete Endstufe 19 mit der Steuerungs-, Auswerte- und/oder Messelektronik 17 verbunden.

Der zweite Elektromotor 21b ist über zwei Anschlussleitungen 29a, 29b und ein zweites Umschaltrelais 31 ebenfalls mit zwei Leitungen 33a, 33b über die vorgeschaltete Endstufe 19 mit der der Endstufe 19 nochmals vorgeschalteten Steuerungs-, Auswert- und/oder Messelektronik 17 verbunden.

Die beiden erwähnten Umschaltrelais 25 und 31 können also auch durch ein gemeinsames Umschaltrelais ersetzt werden. Es wird bereits an dieser Stelle angemerkt, dass es in einem vereinfachten Aufbau auch möglich wäre, beide Anschlussleitungen 23a, 23b und 29a, 29b der beiden Elektromotoren zusammenzuführen und nur mit einem Paar Leitungen 27a, 27b mit der Endstufe zu verbinden. Eine derartige Ausführungsform eröffnet aber nicht die Möglichkeit, dass bei einem Kurzschluss in einem der Elektromotoren oder bei einem Kurzschluss bezüglich der zu einem Elektromotor führenden Speiseleitung der andere Elektromotor noch weiter angesteuert und betrieben werden kann.

Im Normalbetrieb wird über die Netzstromquelle 15 die gesamte automatische Türsteuerung gespeist und durchgeführt, wobei üblicherweise über dem Türbereich Sensoren, Radar und dergleichen angeordnet sind, um die Öffnungsund Schließbewegungen in bekannter Weise automatisch durchzuführen, wobei beide Elektromotoren 21a, 21b synchron angetrieben werden.

Der weitere Schaltungsaufbau gemäß Figur 2 betrifft Komponenten für einen Notstrombetrieb.

Dazu ist gemäß Figur 2 ferner eine Gleichstromquelle 35 (Batterie) vorgesehen, die im üblichen Betrieb bei Netzstromversorgungen über die Netzstromquelle 15 über einen (z.B. zur Steuerungs-, Auswert- und/oder Messelektronik 17 gehörenden) Gleichrichter 37 auch permanent aufgeladen und der optimale Ladungszustand dadurch aufrecht erhalten werden kann.

Der eine Pol 39 (im Ausführungsbeispiel der +Pol) ist über zwei Zusatzleitungen 41a, 41b mit dem nachfolgenden durch das Relais 51 betätigten Relaisschalter S51 verbunden. Nur im nachfolgend noch zu erörternden Notfallbetrieb ist durch den dann umgeschalteten Relaisschalter S51 sichergestellt, dass die beiden Zusatzleitungen 41a, 41b mit nachfolgenden Verbindungsleitungen 47a, 47b mit.den Relaisschaltern S25 bzw. S51 in Verbindung stehen, die im Normbetrieb ebenfalls wieder geöffnet sind, so dass, abweichend von der in Figur 2 gezeigten Schaltstellung, nur im Notfallbetrieb bei umgeschalteten Relaisschaltern S25 und S51 über die Verbindungsleitungen 47a, 47b eine elektrische Verbindung zu den nachgeordneten Motoren 21a, 21b hergestellt ist. Der jeweils zweite Pol 45 (-Pol) ist über zwei weitere Verbindungsleitungen 48a, 48b (im gezeigten Ausführungsbeispiel als Masseanschluss realisiert) jeweils mit dem zweiten Umschaltanschluss der Relaisschalter S25 bzw. S51 verbunden.

Die Zusatzleitungen 41a, 41b führen zu Umschaltern, die durch ein Notfall-Umschaltrelais 51 geschaltet werden, welches im üblichen Betrieb in der in Figur 2 gezeigten Öffnungs- oder Unterbrechungsschaltuhg geschaltet ist, bei der die Elektromotoren also nicht über die Batterie 35 mit Strom versorgbar sind.

Das erwähnte Notfall-Umschaltrelais 51 wird durch ein vorgeschaltetes Auslöserelais 53 umgeschaltet, welches jedoch wiederum über eine Auslöseschalteinrichtung 54 betätigt wird.

Wie aus dem Grundaufbau auch ersichtlich ist, ist die für den Notbetrieb vorgesehene Batterie 35 über das dann geschlossene Notfall-Umschaltrelais 51 und die Zusatzleitung 41a, 41b bzw. 47a, 47b unter Umgehung der Endstufe direkt mit den Elektromotoren zu deren Einstellung elektrisch verbunden.

### Die Betriebsweise ist wie folgt:

Der übliche Betrieb der automatischen Türsteuerung kann, wie bei bekannten Antrieben über die Netzstromversorgung 15, einem integrierten Gleichrichter 18 und die vorgesehene Steuerungs-, Auswerte- und/oder Meßelektronik 17 über die nachgeschaltete Endstufe 19 erfolgen, wobei im gezeigten Ausführungsbeispiel abweichend zum Stand der Technik zwei Elektromotoren antreibbar sind. Dabei werden bevorzugt beide Elektromotoren stets gleichzeitig betrieben, wobei auch eine Schaltungsanordnung möglich ist, bei der nur ein Elektromotor im Normbetrieb angesteuert und - wenn durch eine entsprechende Auswertelektronik festgestellt wird, daß der Elektromotor trotz entsprechender Ansteuerung nicht die gewünschte Umsteuerung vornimmt - automatisch auf den zweiten Elektromotor umgesteuert wird.

In dem Fall, in dem an der Auslöseschalteinrichtung 55 manuell eine Notfallsituation, z.B. durch Betätigung eines Schalters ausgelöst wird oder beispielsweise der Gleichrichter 18 einer Störung unterliegt etc., so fällt das Auslöserelais 53 ab und wird umgesteuert, mit der Folge, daß der Schalter S53 geschlossen wird und damit das Notfall-Umschaltrelais 51 anzieht und der Relaisschalter S51 umschaltet.

Gleichzeitig werden auch das erste und zweite Umschaltrelais 25, 31 von ihrer in Figur 2 gezeigten Normbetriebsstellung in ihre Notfall-Betriebsstellung (strichliert wiedergegeben) umgeschaltet, mit der Folge, daß nunmehr jeweils beide Anschlußleitungen beider Elektromotoren 21a, 21b direkt mit den beiden Polen der Batterie 35 verbunden sind, wobei der Anschluß an den Polen der Batterie bezüglich der Zusatzleitung derart vorgenommen ist, daß beide Elektromotoren automatisch in Öffnungsstellung angetrieben werden, die Fluchtwegtür zu öffnen. Dabei erfolgt eine Öffnungsbewegung selbst bei einer doppelflügeligen Schiebetür auch dann, wenn ein Elektromotor ausgefallen oder eine Zuführleitung unterbrochen ist. Daß ein Elektromotor blockieren kann, kann dabei nach den Sicherheitsbestimmungen und Anforderungen nicht mehr unterstellt werden, so daß die erläuterten Elektromotoren auch ohne Kupplung mit dem Übertragungsmittel, in der Regel dem Zahnriemen 7, im Falle einer automatischen Schiebetür verbunden sind und bleiben können, so daß auch bei Ausfall eines Elektromotors die Öffnungsbewegung allein durch den zweiten Motor bewerkstelligt werden kann.

In Figur 2 sind die Umschaltrelais 53, 51, 25 und 31 in ihrer Schaltstellung für den Normbetrieb gezeigt. Im Notfallbetrieb würde jeweils eine Umsteuerung in die strichlierte Schaltstellung erfolgen. Die Relais 53, 25 und 31 sind im Normbetrieb angezogen und fallen im Notfallbetrieb ab (weil sie stromlos geschaltet sind). Nur das Schaltrelais 51 wird dabei durch Schließen des Schalters S53 (des Relais 53) mit der Batterie 35 verbunden, so daß das Schaltrelais 51 im Normbetrieb abgeschaltet ist und im Notfallbetrieb anzieht, und dadurch den Schalter S51 für den Notfallbetrieb umschaltet. Daß das Relais 51 umgekehrt betrieben wird, ist auch daher problemlos möglich, da dieses Relais in einer bestimmten Zeitabfolge von beispielsweise vier Stunden automatisch durchgetestet wird.

Schließlich ist in Figur 1 auch noch ein weiterer Endschalter 63 eingezeichnet. Dieser Schalter 63 ist mit dem Schalter 53 in einer gemeinsamen Leitung 52 in Reihe geschaltet. Bei Erreichen der endgültigen Öffnungsstellung der Türflügel 1 wird der Schalter 63 betätigt, d.h. geöffnet, mit der Folge, daß das Notfall-Umschaltrelais 51 wieder stromlos geschaltet wird, also in seine Normbetriebsstellung umgeschaltet wird, wodurch die Elektromotoren wieder stromlos geschaltet werden. Falls also die Türen ganz geöffnet sind, unterbricht dieser Endschalter. 63 über das Notfall-Umschaltrelais 51 die Elektromotorspeisung. Wird die Tür nunmehr beispielsweise manuell wieder zugeschoben, so öffnet der Kontakt des Endschalters 63 wieder, so daß die Elektromotoren erneut mit Spannung versorgt und wieder in Öffnungsstellung angetrieben werden.

Ferner ist zum Endschalter 63 ein weiterer Unterbrechungsschalter 65 in Reihe geschaltet, der mit einem Verriegelungshebel zum Verriegeln der Türflügel in Verbindung steht. Sollte ein Türflügel mechanisch verriegelt sein, so könnte selbst bei Zuschaltung der Elektromotoren keine Öffnungsbewegung durchgeführt werden. Da in diesem Fall die Batterie bei nicht durchführbarer Öffnungsbewegung nur geleert werden würde, wird durch diesen zusätzlichen Unterbrechungsschalter 65 bei zugeschaltetem Verriegelungsmechanismus für die Türen sichergestellt, daß dann der Schalter 65 geöffnet wird und eine Stromversorgung der Elektromotoren über die Batterien unterbunden wird. Sobald einer der Schalter S53, 63 oder 65 geöffnet ist, kann ein Notfallbetrieb für die Motoren 21a, 21b nicht stattfinden. Bis auf das Relais 51 sind alle anderen Relais so aufgebaut, daß sie sich normalerweise im Normbetrieb in ihrer angezogenen Schaltstellung befinden.

Das erwähnte Auslöserelais 51 zieht an, sobald die Standardspeisung fehlt oder ein Not-Auf-Schalter 59 betätigt wird.

Die Relais 25, 31 und 53 werden im Normbetrieb über das Netz mit Strom und Spannung versorgt, und zwar über den Gleichrichter in Form von 24 Volt Gleichspannung. Die Versorgung im Normbetrieb kann an der Batterie vorbei oder über die Batterie 35 gepuffert erfolgen.

## Patentansprüche

1. Automatischer Türantrieb, insbesondere für eine Schiebetür mit zumindest einem Türflügel (1), einem Elektromotor (21a, 21b), der im Normalbetrieb über eine Endstufe (19) ansteuerbar ist, mit einer Netzstromquelle (15) zur Energieversorgung im Normalbetrieb und einem Hilfsantrieb für einen Abnorm- oder Notfallbetrieb, **gekennzeichnet durch** die folgenden Merkmale:
- die zumindest beiden Elektromotoren (21a, 21b) sind jeweils einzeln ansteuer- und betreibbar oder gemeinsam ansteuer- und synchron betreibbar,
- es ist ferner eine Gleichstromquelle (35) vorgesehen, worüber die Elektromotoren (21a, 21b) bei Ausfall der Netzstromquelle (15) antreibbar sind, und
- es ist eine Umschalteinrichtung (25, 27, 51, 53) vorgesehen, über die die Elektromotoren (21a, 21b) unter Umgehung der Endstufe (19) mit der Batteriestromquelle (35) verbindbar und darüber im Abnorm- und Notfallbetrieb ansteuerbar sind.

2. Automatischer Türantrieb nach Anspruch 1, **dadurch gekennzeichnet, daß** beide Elektromotoren (21a, 21b) ohne Schaltkupplung direkt oder mittelbar mit dem zu verfahrenden Türflügel (1) verbunden sind.

3. Automatischer Türantrieb nach Anspruch 1 oder 2, **dadurch gekennzeichnet, daß** im Abnorm- oder Notfallbetrieb die Batteriestromquelle (35) mit der Elektromotoren-Antriebseinrichtung (21; 21a, 21b) so verbindbar ist, daß eine Umsteuerung des Türantriebs in Öffnungsstellung erfolgt.

4. Automatischer Türantrieb nach einem der Ansprüche 1 bis 3, **dadurch gekennzeichnet, daß** ferner ein Endschalter (63) vorgesehen ist, der bei Erreichen der Öffnungslage der mit dem automatischen Türantrieb angesteuerten Türflügel (1) automatisch auslösbar ist, worüber die Verbindung der Elektromotoren-Antriebseinrichtung (21; 21a, 21b) von der Batteriestromquelle (35) getrennt wird.

5. Automatischer Türantrieb nach einem der Ansprüche 1 bis 4, **dadurch gekennzeichnet, daß** die Anschlußleitungen (23a, 23b; 29a, 29b) der beiden Elektromotoren (21a, 21b) mit einem oder zwei Umschaltrelais (25, 31) verbunden sind, worüber eine Verbindung im Normbetrieb mit der Endstufe (19) einer Steuerungs-, Auswert- und/oder Meßelektronik (17) hergestellt ist und im Abnorm- oder Notfallbetrieb eine Umschaltung zu den mit der Batteriestromquelle (35) in Verbindung stehenden Zusatzleitungen (41a, 41b; 48a, 48b) durchführbar ist.

6. Automatischer Türantrieb nach einem der Ansprüche 1 bis 5, **dadurch gekennzeichnet, daß** in den von der Batteriestromquelle (35) zu den Elektromotoren (21a, 21b) führenden Umschaltleitungen (41a, 41b) jeweils ein weiterer Unterbrechungsschalter (S51), vorzugsweise in Form eines Relais (51), vorgesehen ist.

7. Automatischer Türantrieb nach einem der Ansprüche 1 bis 6, **dadurch gekennzeichnet, daß** ein Auslöseschalter (S53), vorzugsweise in Form eines Auslöserelais (53) vorgesehen ist, wodurch die Umschaltrelais (25, 31, 51) so umsteuerbar sind, daß die Elektromotoren (21a, 21b) über die Batteriestromquelle (35) direkt ansteuerbar sind.

8. Automatischer Türantrieb nach einem der Ansprüche 1 bis 7, **dadurch gekennzeichnet, daß** ferner ein weiterer Schalter (65) vorgesehen ist, der im Notfallbetrieb bei mechanisch verriegelten und nicht zu öffnenden Türflügeln (1) das Umschaltrelais (51) in Normbetrieb umschaltet (öffnet) und damit die Batterie (35) von den Elektromotoren (21a, 21b) abschaltet.

9. Automatischer Türantrieb nach einem der Ansprüche 1 bis 8, **dadurch gekennzeichnet, daß** die eine elektrische Versorgung der Elektromotoren (21a, 21b) im Notfallbetrieb sicherstellenden Umschaltrelais (25, 31, 55) so geschaltet sind, daß sie bei Ausfall der Netzstromversorgung abfallen.

## Claims

1. Automatic door drive, in particular for a sliding door having at least one door leaf (1), an electric motor (21a, 21b), which can be driven via an output stage (19) during normal operation, having a mains current source (15) for power supply during normal operation and an auxiliary drive for abnormal or emergency operation, **characterized by** the following features:
- the at least two electric motors (21a, 21b) can be driven and operated in each case individually or can be driven jointly and operated synchronously,
- a DC source (35) is furthermore provided, by means of which the electric motors (21a, 21b) can be driven in the event of failure of the mains current source (15), and
- a changeover device (25, 27, 51, 53), is provided, by means of which the electric motors (21a, 21b) can be connected to the battery current source (35) whilst bypassing the output stage (19) and can be driven by means of the said battery current source during abnormal and emergency operation.

2. Automatic door drive, according to Claim 1, **characterized in that** the two electric motors (21a, 21b) are connected without a clutch directly or indirectly to the door leaf (1) to be moved.

3. Automatic door drive, according to Claim 1 or 2, **characterized in that** during abnormal or emergency operation, the battery current source (35) can be connected to the electric motor drive device (21; 21a, 21b) in such a way that the door drive is changed over into the opening position.

4. Automatic door drive, according to one of Claims 1 to 3, **characterized in that** a limit switch (63) is furthermore provided, which can be triggered automatically when the opening position of the door leaf (1) driven by the automatic door drive is reached, by means of which the connection of the electric motor drive device (21; 21a, 21b) is disconnected from the battery current source (35).

5. Automatic door drive, according to one of Claims 1 to 4, **characterized in that** the connecting lines (23a, 23b; 29a, 29b) of the two electric motors (21a, 21b) are connected to one or two changeover relays (25, 31) by means of which, during normal operation, a connection is made to the output stage (19) of an electronic control, evaluation and/or measurement unit (17) and, during abnormal or emergency operation, it is possible to carry out a changeover to the additional lines (41a, 41b; 48a, 48b) connected to the battery current source (35).

6. Automatic door drive, according to one of Claims 1 to 5, **characterized in that** a further interrupter switch (S51), preferably in the form of a relay (51) is in each case provided in the changeover lines (41a, 41b) leading from the battery current source (35) to the electric motors (21a, 21b).

7. Automatic door drive, according to one of Claims 1 to 6, **characterized in that** a triggering switch (S53), preferably in the form of a release relay (53), is provided, whereby the changeover relays (25, 31, 51) can be changed over in such a way that the electric motors (21a, 21b) can be driven directly by means of the battery current source (35).

8. Automatic door drive, according to one of Claims 1 to 7, **characterized in that** a further switch (65), is furthermore provided, which, during emergency operation, in the event of door leaves (1) that are mechanically locked and cannot be opened, changes over (opens) the changeover relay (51) to normal operation and thus disconnects the battery (35) from the electric motors (21a, 21b).

9. Automatic door drive, according to one of Claims 1 to 8, **characterized in that** the changeover relays (25, 31, 55) which ensure an electrical supply of the electric motors (21a, 21b) during emergency operation are switched in such a way that they drop out in the event of failure of the mains current supply.

## Revendications

1. Entraînement automatique pour des portes, en particulier pour une porte coulissante comportant au moins un vantail de porte (1), un moteur électrique (21a, 21b) qui, en fonctionnement normal, est susceptible d'être piloté via un étage final (19), une source de courant secteur (15) pour l'alimentation en énergie en fonctionnement normal et comportant un entraînement auxiliaire pour un fonctionnement anormal ou de secours, **caractérisé par** les éléments suivants :
- au moins les deux moteurs électriques (21a, 21b) sont susceptibles d'être pilotés et de tourner chacun individuellement ou d'être pilotés et de tourner en synchronisme conjointement,
- il est prévu en outre une source de courant continu (35) via laquelle les moteurs électriques (21a, 21b) peuvent être entraînés en cas de défaillance de la source de courant secteur (15), et
- il est prévu un dispositif de commutation (25, 27, 51, 53) via lequel les moteurs électriques (21a, 21b) sont susceptibles d'être connectés à la source de courant à batterie (35) en contournant l'étage final (19), et via lequel ils sont susceptibles d'être pilotés en cas de fonctionnement anormal et de secours.

2. Entraînement automatique pour des portes selon la revendication 1, **caractérisé en ce que** les deux moteurs électriques (21a, 21 b) sont reliés soit directement soit indirectement au vantail de porte (1) à déplacer, sans accouplement commutable.

3. Entraînement automatique pour des portes selon l'une ou l'autre des revendications 1 et 2, **caractérisé en ce qu'**en cas de fonctionnement anormal ou de secours, la source de courant à batterie (35) peut être connectée à l'unité d'entraînement à moteur électrique (21 ; 21a, 21b) de telle sorte qu'il s'effectue une inversion de l'entraînement de porte vers la position d'ouverture.

4. Entraînement automatique pour des portes selon l'une des revendications 1 à 3, **caractérisé en ce qu'**il est prévu en outre un commutateur de fin de course (63) qui est susceptible d'être déclenché automatiquement lorsque le vantail de porte (1) piloté par l'entraînement automatique de porte atteint la position d'ouverture, suite à quoi la connexion de l'unité d'entraînement à moteur électrique (21 ; 21a, 21b) est coupée de la source de courant à batterie (35).

5. Entraînement automatique pour des portes selon l'une des revendications 1 à 4, **caractérisé en ce que** les lignes de connexion (23a, 23b ; 29a, 29b) des deux moteurs électriques (21a, 21b) sont connectées à un ou à deux relais inverseurs (25, 31), suite à quoi une connexion avec l'étage final (19) d'une unité électronique de commande, d'évaluation et/ou de mesure (17) est établie en fonctionnement normal, et en cas de fonctionnement anormal ou de secours il peut s'effectuer une inversion vers les lignes additionnelles (41a, 41b ; 48a, 48b) connectées à la source de courant à batterie (35).

6. Entraînement automatique pour des portes selon l'une des revendications 1 à 5, **caractérisé en ce qu'**il est prévu au moins un autre commutateur-interrupteur (S51), de préférence sous la forme d'un relais (51), dans les lignes d'inversion (41a, 41b) menant de la source de courant à batterie (35) vers les moteurs électriques (21a, 21b).

7. Entraînement automatique pour des portes selon l'une des revendications 1 à 6, **caractérisé en ce qu'**il est prévu un commutateur de déclenchement (S53), de préférence sous la forme d'un relais déclencheur (53), par l'intermédiaire duquel les relais inverseurs (25, 31, 51) sont susceptibles d'être inversés de telle sorte que les moteurs électriques (21a, 21b) peuvent être pilotés directement via la source de courant à batterie (35).

8. Entraînement automatique pour des portes selon l'une des revendications 1 à 7, **caractérisé en ce qu'**il est prévu en outre un autre commutateur (65) qui, en fonctionnement de secours et dans l'état mécaniquement verrouillé et impossible à ouvrir des vantaux de porte (1), fait commuter (ouvre) le relais inverseur (51) vers le fonctionnement normal et coupe ainsi la batterie (35) vis-à-vis des moteurs électriques (21a, 21b).

9. Entraînement automatique pour des portes selon l'une des revendications 1 à 8, **caractérisé en ce que** les relais inverseurs (25, 31, 55) assurant une alimentation électrique des moteurs électriques (21a, 21 b) en cas de fonctionnement de secours sont branchés de manière à retomber en cas de défaillance de l'alimentation en courant secteur.
